# FASCICULE DE BREVET EUROPEEN

(11) **EP 3 083 874 B1**
(45) Date de publication et mention de la délivrance du brevet: **02.11.2022**
(21) Numéro de dépôt: 14830835.6
(22) Date de dépôt: 19.12.2014
(51) Int. Cl.: C08F 212/14, C09K 8/532, C08L 25/04

(54) **UTILISATION D'UN COPOLYMERE A BASE D'ACIDE STYRENE SULFONIQUE POUR INHIBER OU RALENTIR LA FORMATION DE DEPÔTS SULFURES**
VERWENDUNG EINES COPOLYMERS AUS STYROL-SULFONSÄURE ZUR HEMMUNG ODER VERLANGSAMUNG DER BILDUNG VON SCHWEFELWASSERSTOFFABLAGERUNGEN
USE OF A COPOLYMER MADE FROM STYRENE SULPHONIC ACID TO INHIBIT OR SLOW THE FORMATION OF SULPHIDE DEPOSITS

(30) Priorité: 20.12.2013 FR 1363289
(43) Date de publication de la demande: 26.10.2016
(73) Titulaire: TotalEnergies OneTech, 92400 Courbevoie (FR); Université Claude Bernard Lyon I, 69100 Villeurbanne (FR); Centre National de la Recherche Scientifique (C.N.R.S.), 75016 Paris (FR)
(72) Inventeur: HURTEVENT, Christian, F-46310 SAINT CHAMARAND (FR); BARAKA-LOKMANE, Salima, F-64000 Pau (FR); ORDONEZ-VARELA, John-Richard, F-64140 Lons (FR); TILLEMENT, Olivier, F-69270 Fontaines Saint-martin (FR); ROSSETTI, Fabien, F-69008 Lyon (FR); OULD METIDJI, Mahmoud, F-13015 Marseille (FR)
(74) Mandataire: Plasseraud IP
(86) Numéro de dépôt international: PCT/FR2014/053442
(87) Numéro de publication internationale: WO 2015/092311

(56) Documents cités:
- CA-A1- 2 758 686
- FR-A1- 2 803 304
- US-A1- 2009 143 252

## Description

### DOMAINE TECHNIQUE

La présente invention se rapporte à l'utilisation d'un copolymère renfermant (i) une unité comprenant un motif acide styrène sulfonique éventuellement neutralisé et (ii) une unité renfermant un motif acide (poly)carboxylique éventuellement neutralisé et/ou un motif (poly)amido-amine, pour inhiber ou ralentir la formation de dépôts sulfures lors de l'extraction de gaz ou de pétrole. Elle se rapporte également à une méthode pour inhiber ou ralentir la formation de dépôts sulfures lors de l'extraction de gaz ou de pétrole, comprenant l'injection, dans un puits de forage, une formation souterraine ou un puits de pétrole ou de gaz, d'un fluide renfermant le copolymère précité.

### ARRIERE-PLAN DE L'INVENTION

Les fluides de production pétrolière sont constitués de pétrole, de gaz et d'eau. Les eaux de réservoir peuvent être des eaux très salées qui contiennent de nombreux éléments. En particulier, à haute température, les eaux de production peuvent contenir des éléments comme le fer, le zinc ou le plomb, provenant des roches avec lesquelles les eaux de réservoir ont été en contact pendant des millions d'années. Quand le gaz associé à la production contient des sulfures comme le sulfure d'hydrogène, on peut alors former des sulfures de fer, de zinc et/ou de plomb. Ces sels peuvent se déposer à proximité immédiate du réservoir ou dans les installations de production comme les tuyauteries ("tubing"). De tels dépôts ont en particulier été observés lors de la production concomitante de gaz et de saumure dans le Golfe du Mexique et dans le secteur britannique de la Mer du Nord. Pour les éliminer, il est nécessaire de nettoyer régulièrement les équipements, ce qui affecte négativement la productivité du procédé.

Une solution pour éliminer ces dépôts a consisté à effectuer des lavages acides. Outre leur courte durée d'action, ces traitements ne sont toutefois pas sans risques pour l'homme et les équipements, en particulier dans des conditions de haute pression et haute température.

Pour remédier à ce problème, il est possible d'inhiber la formation de ces dépôts par injection d'inhibiteurs en continu, en fond de puits, quand des installations sont en place. Dans le cas contraire, l'injection du produit se fait par une technique d'injection appelée « squeeze ». Cette technique consiste à injecter une grande quantité de produit dans le réservoir pétrolier alors que la production est arrêtée. L'inhibiteur de dépôt injecté dans le réservoir doit s'adsorber sur la roche pendant l'injection et être relargué progressivement lors de la remise en production, afin d'empêcher la formation des dépôts sur une longue période de temps, pendant la production de l'eau de réservoir.

Parmi les solutions proposées dans l'art antérieur pour inhiber la formation de dépôts de sulfures, il a été suggéré d'ajouter au fluide de forage injecté dans le puits un agent inhibiteur capable de prévenir la formation des cristaux de sulfures, d'empêcher leur croissance ou de les disperser. Ainsi, un polymère de faible poids moléculaire, qui est un homo- ou copolymère de vinyl sulfonate, a été étudié par M.M. JORDAN et al. dans le document SPE 64427 présenté à la Conférence SPE Asie Pacifique à Brisbane (Australie), le 16 octobre 2000. D'autres inhibiteurs ont été proposés dans les documents US-7,159,655 et US-7,398,824. Il s'agit respectivement de copolymères d'acrylamide, d'ammonium quaternaire et éventuellement d'acrylate, et de copolymères d'acrylamide, de sel de diallyldiméthylammonium et éventuellement d'acrylate, qui sont introduits dans un fluide porteur ou dans de la saumure. Il est indiqué que ces polymères sont plus solubles, dans les saumures de haute densité, que des polymères à base d'acide acrylamidométhylpropane sulfonique, d'acide maléique et d'acide acrylique. Le document GB-2 448 442 rapporte l'introduction du même type de polymère dans un fluide de fracturation. Le document US-5,171,459 suggère, de son côté, l'utilisation d'alkyldiphényléther sulfonates tels que le produit Dowfax de DOW CHEMICAL. Il est démontré que ces composés dispersent mieux les dépôts de sulfures que d'autres polymères sulfonés tels qu'un poly(vinyl sulfonate) et un copolymère vinylsulfonate / styrène / anhydride maléique. Le document US2009/0143252 décrit une méthode pour prévenir la formation des dépôts sulfures comprenant une étape de traitement d'un fluide de production avec un additif comprenant un homopolymère d'un monomère acrylamide spécifique.

Il a toutefois été observé que les inhibiteurs de dépôts de sulfures connus n'étaient pas efficaces pour une utilisation dans des conditions de haute pression et haute température. Il en est de même des phosphonates qui sont connus pour se dégrader à haute température, les produits de dégradation de ces composés présentant en outre une très faible solubilité en présence de cations alcalino-terreux, ce qui réduit fortement leur utilisation et la rend même quasi impossible dans des réservoir à plus de 150°C.

Il subsiste donc le besoin de disposer d'un composé permettant d'inhiber ou de ralentir la formation de dépôts de sulfures, en particulier de sulfures de zinc, de fer et de plomb, qui soit stable à haute température et haute pression et qui puisse également être efficace contre la formation d'autres dépôts inorganiques ou compatible avec les inhibiteurs utilisés à cette fin. Il serait en outre souhaitable que ce composé puisse être libéré de manière prolongée.

Les inventeurs ont démontré que ces besoins pouvaient être satisfaits en utilisant, comme inhibiteur de dépôts de sulfures, un copolymère particulier tel qu'un copolymère acide styrène sulfonique / anhydride maléique. Il a déjà été suggéré d'utiliser un tel copolymère comme inhibiteur de dépôts inorganiques non sulfurés, à base de carbonate de calcium et de sulfate de baryum, dans les puits pétroliers (FR 2 803 304). Ces dépôts sont généralement formés lors de la mise en contact de la saumure présente dans le réservoir avec le fluide injecté pour récupérer le pétrole. Il est communément admis que les inhibiteurs de dépôt de carbonate ou de sulfate de calcium ne sont pas adaptés pour empêcher la formation de dépôts de sulfures. Cela résulte du fait que les carbonate de calcium et sulfate de baryum portent des charges de surface positives, contrairement aux sulfures de plomb, de fer et de zinc dont le point isoélectrique est inférieur à 4 (M. Kosmulski, Journal of Colloid and Interface Science, 35, (2011), 1-15). Les polymères anioniques utilisés pour inhiber la formation des premiers ne sont donc pas adaptés à développer des interactions électrostatiques avec les seconds. Ainsi, il n'était pas prévisible que les copolymères précités pouvaient offrir une solution aux besoins précités.

### RESUME DE L'INVENTION

La présente invention a pour objet l'utilisation d'un copolymère renfermant (i) une unité comprenant un motif acide styrène sulfonique éventuellement neutralisé et (ii) une unité renfermant un motif acide (poly)carboxylique éventuellement neutralisé et/ou un motif (poly)amido-amine, pour inhiber ou ralentir la formation de dépôts sulfures, notamment de sulfures de plomb, de fer et/ou de zinc, lors de l'extraction de gaz ou de pétrole.

Elle a également pour objet une méthode pour inhiber ou ralentir la formation de dépôts sulfures, notamment de sulfures de plomb, de fer et/ou de zinc, lors de l'extraction de gaz ou de pétrole, comprenant l'injection, dans un puits de forage, une formation souterraine ou un puits de pétrole ou de gaz, d'un fluide contenant un copolymère renfermant (i) une unité comprenant un motif acide styrène sulfonique éventuellement neutralisé et (ii) une unité renfermant un motif acide (poly)carboxylique éventuellement neutralisé et/ou un motif (poly)amido-amine.

Sans vouloir être liés par cette théorie, les inventeurs ont émis l'hypothèse selon laquelle l'effet inhibiteur des copolymères selon l'invention était basé sur une complexation préférentielle des sites de surface des particules de sulfure de zinc et de plomb par les fonctions acide carboxylique ou amido-amine de ces copolymères et sur la répulsion stérique engendrée par les fonctions acide sulfonique, ces deux actions contribuant à ralentir la croissance des cristaux de sulfure formés et donc la cinétique de formation des précipités de sulfure de plomb, de fer et de zinc. En pratique, ces précipités n'ont donc pas le temps de se former dans les conditions d'exploitation d'un gisement de gaz ou de pétrole, puisque le dépassement du seuil de saturation reste limité dans le temps dans ce type de procédé. Les copolymères selon l'invention peuvent en outre exercer leur fonction connue d'inhibition de la formation de dépôts de carbonate de calcium ou de sulfate de baryum, notamment.

### DESCRIPTION DETAILLEE DE MODES DE REALISATION

Le copolymère utilisé selon la présente invention peut être constitué uniquement (i) d'unités comprenant (et de préférence constituées par) un motif acide styrène sulfonique éventuellement neutralisé et (ii) d'unités renfermant (et de préférence constituées par) un motif acide (poly)carboxylique éventuellement neutralisé et/ou au moins un motif (poly)amido-amine. Par "motif acide (poly)carboxylique", on entend un motif portant une ou plusieurs fonctions acides carboxyliques. Ce motif est avantageusement obtenu à partir d'un monomère insaturé portant au moins une, et de préférence deux, fonctions acides carboxyliques, choisi par exemple parmi l'acide maléique, l'acide fumarique, l'acide itaconique, l'acide citraconique, l'anhydride cis-1,2,3,6-tétrahydro-phthalique, l'acide maléique étant préféré. Ces motifs acides carboxyliques peuvent être neutralisés à l'aide de sels de sodium, de potassium ou d'ammonium, de préférence de sels de sodium. Le motif (poly)amido-amine peut être obtenu par réaction de tout ou partie des fonctions acides carboxyliques avec un composé, de préférence un polymère, portant au moins deux fonctions amines primaires ou secondaires, qui peut être choisi notamment parmi : les polyamines telles que la DETA (diéthylène triamine), la TETA (triéthylène tétramine), la TEPA (tétraéthylène pentamine), la dihexylène triamine et la polyéthylèneimine (PEI) ; les polymères siliconés, en particulier les polydiméthylsiloxanes, fonctionnalisés par des groupements aminés ; les chitosans ; les polypeptides et protéines, de préférence la DETA et la PEI.

On préfère que le pourcentage molaire, dans le copolymère selon l'invention, d'unités renfermant un motif acide styrène sulfonique éventuellement neutralisé soit compris entre 10 et 90%, de préférence entre 25 et 75% et, mieux, entre 50 et 70%.

Ce copolymère peut renfermer au moins une autre unité chimiquement distincte de celles précitées et qui peut par exemple représenter au plus 20% mol et de préférence au plus 10% mol, par rapport au nombre de moles totales d'unités monomères dans ledit copolymère. Cette autre unité peut être choisie notamment parmi les (méth)acrylamides, les esters d'acide (méth)acrylique, l'acétate de vinyle, le styrène et le vinyltoluène.

Le copolymère utilisé selon l'invention répond avantageusement à la formule suivante : 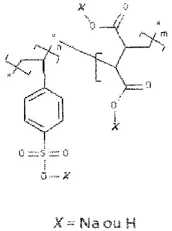 où m/(m+n) = 0,1-0,9 et n/(m+n) = 0,9-0,1, de préférence m/ (m+n) = 0,25-0,75 et n/(m+n) = 0,75-0,25, et plus préférentiellement m/ (m+n) = 0,3-0,5 et n/(m+n) = 0,5-0,7.

Selon une forme d'exécution particulièrement préférée de l'invention, tout ou partie des fonctions acides carboxyliques du copolymère sont substituées par des fonctions amido-amines résultant, comme indiqué précédemment, de la réaction de ces fonctions acides carboxyliques avec au moins deux fonctions amines primaires ou secondaires portées par un composé qui est mis à réagir avec les unités renfermant au moins un motif acide (poly)carboxylique du copolymère selon l'invention. Il a en effet été observé que ces copolymères présentaient des propriétés améliorées d'inhibition de la formation de dépôts sulfures. On pense que ces copolymères permettent d'obtenir un effet inhibiteur prolongé, par hydrolyse progressive des fonctions amides, et également plus efficace, dans la mesure où le doublet libre de l'atome d'azote des fonctions amines n'ayant pas participé aux liaisons amides est utile pour complexer les sites de surface des particules de sulfure de zinc et de plomb. Ces copolymères à fonctions amido-amines limitent également les interactions entre les unités acides (poly)carboxyliques et des dépôts de sulfate de baryum ou de carbonate de calcium, par exemple, ce qui peut permettre d'éviter que le copolymère réagisse exclusivement avec ces dépôts qui ont tendance, dans certaines conditions, à se former avant les dépôts de sulfures.

Le copolymère utilisé selon l'invention présente en général une masse moléculaire moyenne comprise entre 10 et 50 kDa.

Ce copolymère peut être obtenu suivant des procédés classiques de polymérisation radicalaire en voie aqueuse ou hydro-alcoolique et à pH acide. Il est également disponible dans le commerce auprès des sociétés ALDRICH ou AKZO NOBEL.

Du fait de sa bonne tenue thermique, le polymère selon l'invention peut être utilisé en particulier dans des puits pétroliers fonctionnant à haute pression, c'est-à-dire à plus de 10 MPa, par exemple de 20 à 150 MPa, et à haute température, c'est-à-dire de 150 à 250°C, par exemple de 200 à 230°C.

Ce polymère peut être injecté dans le puits sous forme d'additif dans un fluide de forage. Ce fluide de forage peut renfermer de 1 à 10 ppm du polymère décrit précédemment.

En variante, le polymère décrit précédemment peut être injecté dans le puits en "squeeze", c'est-à-dire suivant un procédé consistant à rincer le puits à l'eau de mer, puis à injecter dans le puits un fluide contenant ce polymère et à introduire à nouveau de l'eau de mer dans le puits pour disperser le polymère dans le réservoir et lui permettre de s'adsorber sur les formations rocheuses souterraines. Lors de ce traitement, les opérations d'extraction de pétrole sont interrompues et, lorsqu'elles seront reprises, le polymère sera libéré progressivement des formations rocheuses pour empêcher ou ralentir la formation des dépôts de sulfures. Dans cette variante, le fluide injecté peut renfermer de l'ordre de 10% en poids du polymère décrit ci-dessus.

Dans tous les cas, le fluide véhiculant le copolymère selon l'invention peut en outre contenir d'autres additifs tels que des inhibiteurs de corrosion, des inhibiteurs de paraffines, des agents tensioactifs ou des agents démulsionnants, des agents dispersants, notamment des dispersants d'asphaltène, des agents moussants ou des agents anti-mousse, des agents biocides, des capteurs d'oxygène, des agents chélatants tels que d'EDTA et le DTPA, et leurs mélanges.

Selon une forme d'exécution avantageuse de l'invention, ce fluide renferme en outre au moins un polymère porteur de fonctions amines, telles que les polyamines citées précédemment, notamment la DETA ou la PEI, les polymères siliconés porteurs de fonctions amines, et leurs mélanges.

La présente invention sera mieux comprise à la lumière des exemples non limitatifs suivants, qui sont donnés à titre purement illustratif et n'ont pas pour but de limiter la portée de cette invention qui est définie par les revendications annexées.

### FIGURES

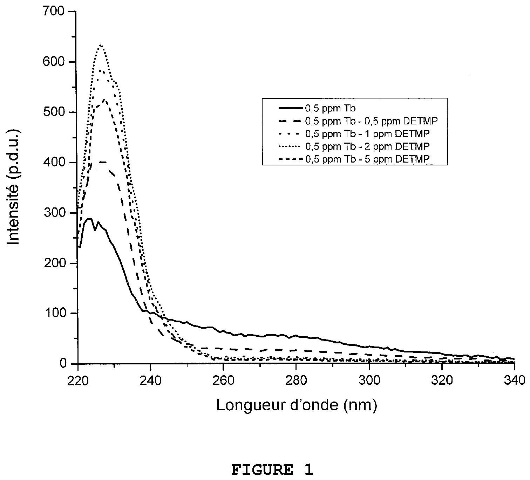

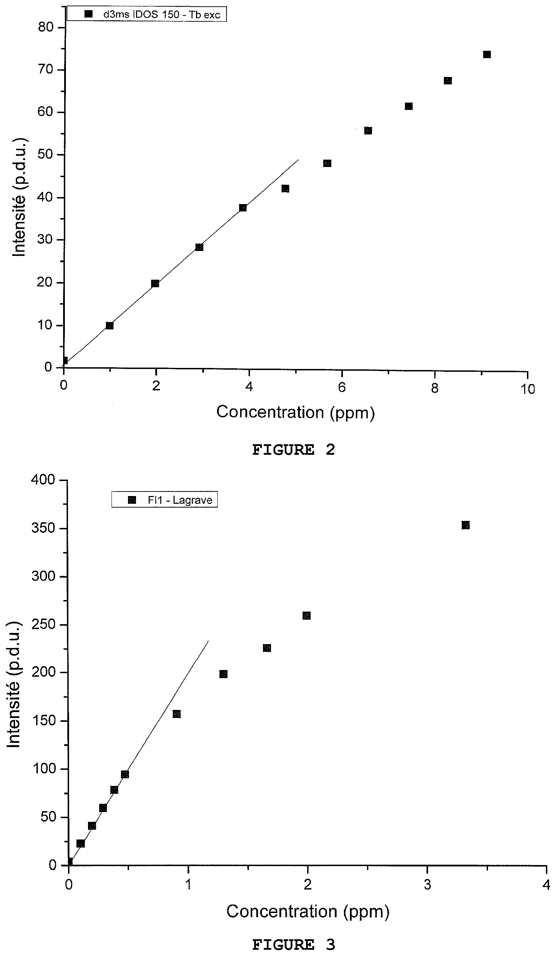

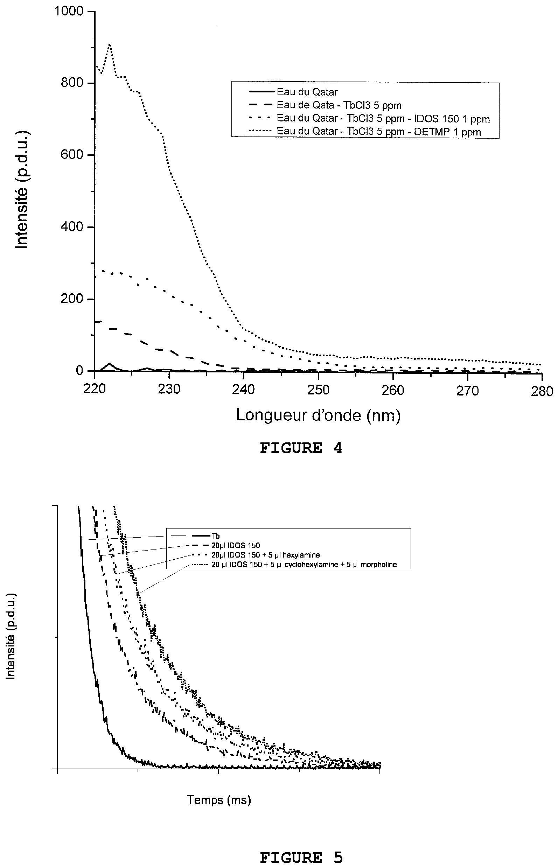

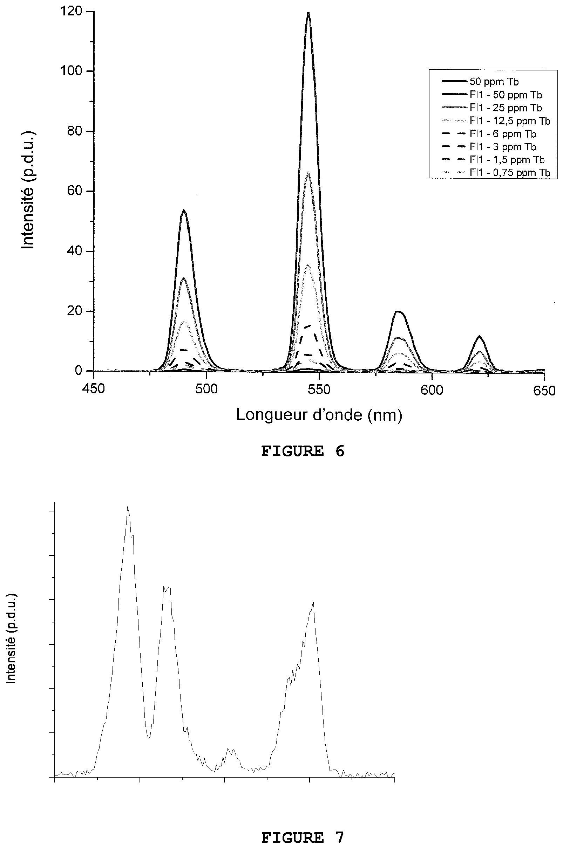

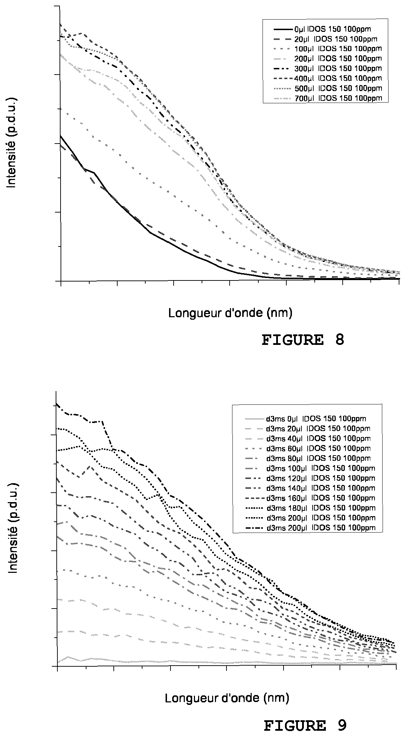

**La** **Figure 1** illustre le spectre GPC de l'inhibiteur Fl1 avant et après vieillissement
**La** **Figure 2** représente l'évolution de l'intensité de fluorescence à 414 nm avec l'inhibiteur Fl1 à deux températures différentes
**La** **Figure 3** représente l'évolution de l'intensité de fluorescence à 414 nm avec l'inhibiteur Fl1 à deux températures différentes
**La** **Figure 4** représente l'évolution de l'intensité de fluorescence à 414 nm avec l'inhibiteur Fl1-DETA
**La** **Figure 5** représente l'évolution de l'intensité de fluorescence à 414 nm avec l'inhibiteur Fl1-DETA à deux températures différentes
**La** **Figure 6** illustre le dispositif utilisé pour la mise en œuvre du Tube Blocking Test

### EXEMPLES

### I/ Préparation de solutions inhibitrices

### Exemple 1 : Préparation d'une solution inhibitrice de poly(sodium 4-styrènesulfonate)

Le polymère, acheté à Sigma Aldrich (CAS : 25704-18-1 ; (C₈H₇NaO₃S)ₙ), possède une masse molaire de l'ordre de 100 kDa. Dix grammes de poly(sodium 4-styrenesulfonate) sont pesés dans un flacon de 100 mL. La masse est ensuite ajustée à 100 grammes par ajout d'eau ultra pure. Le pH est alors d'environ 8,7. Le pH est ensuite ajusté à 4.5 par des ajouts d'acide chlorhydrique 6M.

### Exemple 2 : Préparation d'une solution inhibitrice de sel de sodium de poly (acide 4-styrènesulfonique-co-acide maléique) (ou Fl1)

Le polymère, acheté à Sigma Aldrich (CAS : 68037-40-1; [CH2CH(C6H4SO3R)]ₓ[CH(CO2R)CH(CO2R)]_{y}, R=H or Na), possède une masse molaire de l'ordre de 20 kDa. Le polymère présente un ratio de trois fonctions acide styrène sulfonique pour une fonction acide maléique. Dix grammes de Fil sont pesés dans un flacon de 100 mL. La masse est ensuite ajustée à 100 grammes par ajout d'eau ultra pure. Le pH d'environ 7.5, est ajusté à 4.5 par des ajouts d'acide chlorhydrique 6M.

### Exemple 3 : Préparation d'une solution inhibitrice de sel de sodium de poly (acide 4-styrènesulfonique-co-acide maléique) (ou Fllb)

Le polymère, acheté à Sigma Aldrich (CAS : 68037-40-1; [CH2CH(C6H4SO3R)]ₓ[CH(CO2R)CH(CO2R)]_{y}, R=H or Na), possède une masse molaire de l'ordre de 20 kDa. Le polymère présente un ratio équimolaire de fonctions acide styrène sulfonique et acide maléique. Dix grammes de Fl1b sont pesés dans un flacon de 100 mL. La masse est ensuite ajustée à 100 grammes par ajout d'eau ultra pure. Le pH d'environ 7.5 est ajusté à 4.5 par des ajouts d'acide chlorhydrique 6M.

### Exemple 4 : Préparation d'une solution inhibitrice de Fl1-DETA

Dans un flacon de 100 mL, on a fait réagir 10g de Fl1, obtenu suivant l'exemple 2, avec 2g de diethylènetriamine d'une masse molaire de 103.17 g.mol⁻¹ achetée à Sigma Aldrich (CAS : 111-40-0 ; (NH₂CH₂CH₂) 2NH) . Le pH d'environ 11 est ajusté à 4.5 par ajout d'HCl 6M.

### Exemple 5 : Préparation d'une solution inhibitrice de Fl1-PEI

Dans un ballon monocol de 50 mL, 10 g de Fl1 sont placés en présence de 10 mL d'une solution de polyéthylènimine ou PEI (CAS 9002-98-6) à 50% en poids. Le ballon est coiffé d'un réfrigérant et placé sous agitation. 40 mL d'eau ultra pure sont ensuite additionnés. Le tout est chauffé à 80°C pendant 3h, puis 40 mL d'eau ultra pure sont ajoutés et le montage est maintenu en température pendant 24h. Après retour à température ambiante, le contenu du ballon est dispersé dans 100 mL d'eau ultra pure pour donner un produit d'aspect laiteux à 5% en poids de Fl1 et 2,5% de PEI. Le pH est ajusté à 4,5 à l'aide d'HCl 1,2 M.

### II/ Evaluation du vieillissement thermique des solutions inhibitrices.

Ces tests sont effectués sur une période de cinq jours. De l'azote est préalablement mis à buller dans les échantillons afin d'éliminer l'oxygène. Les tests sont effectués dans des conditions anaérobies sous une température de 200°C et une pression d'azote de l'ordre de 6.89 MPa (1000 psi), appliquées tout au long du vieillissement.

Afin de déterminer la stabilité des produits analysés sous de telles conditions, les variations de pression sont étudiées en fonction du temps. Une augmentation de la pression traduit en effet un dégagement gazeux lié à une probable décomposition du produit. Le changement d'aspect des solutions (précipitation, changement de couleur, etc.) peut également renseigner sur la stabilité des produits testés. Une mesure du pH peut être effectuée avant et après vieillissement. Une analyse des produits par GPC avant et après vieillissement peut également mettre en évidence la stabilité des produits.

### Exemple 6 : Vieillissement du Fl1

Dans un réacteur sous pression d'azote de 6.89 MPa (~1000 psi) sont placés dans une cellule en verre 70mL de la solution de Fl1 de l'exemple 2 dans laquelle on a préalablement fait buller de l'azote. Après vieillissement à 200°C pendant cinq jours, le Fil subi une augmentation d'une unité de pH environ (de 4.3 à 5.4). Comme illustré à la Figure 1, des analyses par chromatographie en phase gazeuse (GPC) avant et après vieillissement ne montrent pas de changement du produit (pas de déplacement ni d'apparition de pics), qui conserve par ailleurs le même aspect (solution jaune foncée). Le Fl1 est donc thermiquement stable.

### Exemple 7 : Vieillissement du Fl1-DETA

Dans un réacteur sous pression d'azote de 6.89 MPa (~1000 psi) sont placés dans une cellule en verre, 70mL de la solution de Fl1-DETA de l'exemple 4 dans laquelle on a préalablement fait buller de l'azote. Après vieillissement à 200 °C pendant cinq jours, le Fl1-DETA subi une augmentation de trois unités de pH environ (de 5.56 à 8.25). Des analyses par chromatographie en phase gazeuse (GPC) avant et après vieillissement ne montrent pas de changement du produit (pas de déplacement ni d'apparition de pics) qui conerve par ailleurs le même aspect (solution jaune foncée). Le Fl1-DETA est donc thermiquement stable.

### III/ Evaluation de l'effet inhibiteur par fluorimétrie

Une solution de soufre est préparée à deux concentrations (100 mg.L⁻¹ et 200mg.L⁻¹) de soufre par dilution de Na₂S.9H₂O (Aldrich, 98 wt%) dans de l'eau ultra pure. Le contenu de la fiole est versé dans un erlenmeyer muni d'un sérum cap au travers duquel un pH mètre mesure en continu le pH de la solution. Le tout est placé sous agitation mécanique. Des ajouts de solution d'HCl 0.12M sont effectués à l'aide d'une seringue via le sérum cap afin d'atteindre un pH de 5.5. La solution est alors répartie à l'aide d'une seringue dans des flacons scellés de 15 mL munis de sérums caps. Les échantillons sont conservés pendant une durée maximum d'une semaine à 5°C.

Une solution zincique est préparée à 150 mg.L⁻¹ de zinc par dissolution de 157 mg de ZnCl₂ (Aldrich, 98wt%) dans une fiole jaugée de 500 mL à l'aide d'une solution saline (25 g.L⁻¹ [Na⁺] et 5 g.L⁻¹ [Ca²⁺]). Le pH de la solution est ajusté à 4.5 par ajouts successifs d'une solution d'HCl à 0.12M.

Les inhibiteurs sont préparés à 5% en poids dans l'eau et le pH est ajusté à 4.5 à l'aide d'une solution de HCl à 0.12M et 12M. Les inhibiteurs sont ensuite ajoutés à différentes concentrations (10, 30, 50 et 100 ppm) dans la solution zincique préparée précédemment. Les pH sont contrôlés et réajustés si besoin à l'aide d'HCl à 0.12M ou de NaOH à 0,1M.

Les mesures sont effectuées à l'aide d'un spectrofluorimètre *Varian Cary Eclipse.* La fluorescence du ZnS est tout d'abord évaluée par analyse d'un échantillon témoin dans lequel du Zinc est mis en présence de soufre sans conditions salines particulières. Les conditions d'analyse standard comprennent λexc = 414 nm et λem = 434 nm. Des variations de la concentration de soufre au cours du temps, liées au dégagement de sulfure d'hydrogène, imposent de changer de capsule toutes les demi-douzaines de mesures, ainsi que d'effectuer des références fréquentes entre les mesures. Les analyses sont effectuées tout d'abord à température ambiante (20°C) puis à 80°C. Elles sont réalisées dans des cuves en PMMA.

Trois millilitres de la solution zincique sont mis en présence de 0,5 mL d'une des solutions de soufre préparées et une analyse est effectuée, qui fait office de référence. Par la suite, on met rapidement en présence 3mL de solution contenant l'inhibiteur, à la concentration souhaitée, et le chlorure de zinc (à confirmer), avec 0.5 mL d'une des solutions de soufre, avant de lancer l'analyse. Dans le cas des tests à 80°C, les échantillons sont placés pendant une heure dans une étuve à 80°C. Les analyses sont alors effectuées en utilisant un porte-échantillon thermostaté réglé sur 80°C. Les échantillons sont excités à 414 nm, et on enregistre le spectre de fluorescence entre 425 nm et 450 nm.

### Exemple 8 : Suivi de l'effet inhibiteur de ZnS du Fl1

Cinq millilitres de la solution de Fl1 de l'exemple 2 sont placés dans un flacon de 10 mL auquel sont ajoutés 5 mL d'eau ultra pure. Une solution à 5% en poids de Fl1 est alors obtenue. Le pH de cette solution est ajusté à 4.5 par des ajouts d'HCl 6M. Après quoi, 2, 6 et 10 µL de cette solution sont placés à l'aide d'une micropipette dans des flacons de 10mL. Sont ensuite ajoutés respectivement dans chaque flacon 9998, 9994 et 9990 µL de la solution zincique décrite précédemment pour obtenir trois solutions à 10, 30 et 50 ppm de Fl1. Le pH des solutions est ajusté à 4.5 si besoin par des ajouts d'HCl 0.12M. Les solutions sont ensuite analysées à température ambiante puis à 80°C selon le protocole décrit ci-dessus, avec une solution de soufre à 100 mg.L⁻¹. Les courbes de fluorescence obtenues sont illustrées à la Figure 2. Comme il ressort de cette figure, le Fil ralentit clairement la croissance du ZnS dans ces conditions. L'effet inhibiteur de ce dernier semble exacerbé dans des conditions de température plus élevées.

### Exemple 9 : Suivi de l'effet inhibiteur de ZnS du Fl1b

Cinq millilitres de la solution de Fl1 b de l'exemple 3 sont placés dans un flacon de 10 mL auquel sont ajoutés 5mL d'eau ultra pure. Une solution à 5% en poids de Fl1 est alors obtenue. Le pH de cette solution est ajusté à 4.5 par des ajouts d'HCl 6M. Après quoi, 2, 6 et 10 µl de cette solution sont placés à l'aide d'une micropipette dans des flacons de 10mL. Sont ensuite ajoutés respectivement dans chaque flacon 9998, 9994 et 9990 µl de la solution zincique décrite précédemment pour obtenir trois solutions à 10, 30 et 50 ppm de Fl1 b. Le pH des solutions est ajusté à 4.5 si besoin par des ajouts d'HCl 0.12M. Les solutions sont ensuite analysées à température ambiante puis à 80°C selon le protocole décrit ci-dessus, avec une solution de soufre à 100 mg.L⁻¹. Les courbes de fluorescence obtenues sont illustrées à la Figure 3. Comme il ressort de cette figure, le Fl1b ralenti clairement la croissance du ZnS dans ces conditions. L'effet inhibiteur de ce dernier semble exacerbé dans des conditions de température plus élevées.

### Exemple 10 : Suivi de l'effet inhibiteur de ZnS du Fl1-DETA

Cinq millilitres de la solution de Fl1-DETA de l'exemple 4 sont placés dans un flacon de 10 mL auquel sont ajoutés 5mL d'eau ultra pure. Une solution à 5% en poids de Fl1-DETA (10:2) est alors obtenue. Le pH de cette solution est ajusté à 4.5 par des ajouts d'HCl 6M. Après quoi, 1, 4 et 10 µL de cette solution sont placés à l'aide d'une micropipette dans des flacons de 10mL. Sont ensuite ajoutés respectivement dans chaque flacon 9999, 9996 et 9990 µL de la solution zincique décrite précédemment pour obtenir trois solutions à 5, 20 et 50 ppm de Fl1-DETA. Le pH des solutions est ajusté à 4.5 si besoin par des ajouts d'HCl 0.12M. Les solutions sont ensuite analysées à température ambiante selon le protocole décrit ci-dessus 11 avec une solution de soufre à 100 mg.L⁻¹. Les courbes de fluorescence obtenues sont illustrées à la Figure 4. Comme il ressort de cette figure, une diminution de la croissance du sulfure de zinc est observée avec l'augmentation de la concentration en Fl1-DETA (10:2). Le Fl1-DETA inhibe clairement la formation du ZnS.

### Exemple 11 : Suivi de l'effet inhibiteur de ZnS du Fl1-PEI.

Cinq millilitres de la solution de Fl1-PEI sont placés dans un flacon de 10 mL auquel sont ajoutés 5mL d'eau ultra pure. Une solution à 5 en poids de Fl1-PEI (10:5) est alors obtenue. Le pH de cette solution est ajusté à 4.5 par des ajouts d'HCl 6M. Après quoi, 2, 6 et 10 µl de cette solution sont placés à l'aide d'une micropipette dans des flacons de 10mL. Sont ensuite ajoutés respectivement dans chaque flacon 9998, 9994 et 9990 µL de la solution zincique décrite précédemment pour obtenir trois solutions à 5, 30 et 50 ppm de Fl1-PEI. Le pH des solutions est ajusté à 4.5 si besoin par des ajouts d'HCl 0.12M. Les solutions sont ensuite analysées à température ambiante selon le protocole décrit ci-dessus avec une solution de soufre à 100 mg.L⁻¹. Les courbes de fluorescence obtenue sont illustrées à la Figure 5. Comme il ressort de cette figure, le Fl1-PEI a un effet inhibiteur sur le sulfure de zinc à température ambiante. Ce pouvoir inhibiteur est exacerbé dans des conditions de température plus élevées.

### IV/ Evaluation de l'effet inhibiteur par le Tube Blocking Test.

Deux solutions salines contenant des cations métalliques (A) et du soufre (B) sont mélangées puis passent dans un tube où un dépôt se forme. Le tube est muni d'un filtre. Lorsque le dépôt est formé dans les tubes, leur surface intérieure diminue et le filtre se bouche, ce qui conduit à une augmentation de la pression différentielle. Les inhibiteurs sont mélangés dans la solution A et sont testés entre 5 et 30 ppm. Une analyse du filtre par SEM puis par EDX permet d'obtenir des informations précises sur la quantité et la nature des dépôts formés.

Le dispositif utilisé est représenté à la Figure 6 annexée.

Les tests sont effectués avec une solution B qui est toujours la même, mais avec des solutions A pouvant contenir des éléments de différentes nature, résumées dans le Tableau 1.

**Tableau 1**

| **Conditions expérimentales du Tube Blocking Test** | | | | | | |
|---|---|---|---|---|---|---|
| **Ion** | **Solution A1 (mg/l)** | **Solution A2 (mg/l)** | **Solution A3 (mg/l)** | **Solution A4 (mg/l)** | **Solution A5 (mg/l)** | **Solution B (mg/l)** |
| **Na** | 63310 | 63310 | 29505 | 63310 | 63310 | 117576 |
| **Ca** | 37318 | 37318 | 7223 | 37318 | 37318 | 0 |
| **Mg** | 2174 | 2174 | 511 | 2174 | 2174 | 0 |
| **K** | 21198 | 21198 | 0 | 21198 | 21198 | 0 |
| **Ba** | 4946 | 4946 | 0 | 4946 | 4946 | 0 |
| **Sr** | 4480 | 4480 | 0 | 4480 | 4480 | 0 |
| **Fe** | 900 | 0 | 0 | 0 | 450 | 0 |
| **Pb** | 100 | 0 | 0 | 50 | 0 | 0 |
| **Zn** | 300 | 300 | 200 | 0 | 300 | 0 |
| s | 0 | 0 | 0 | 0 | 0 | 10 |

### Exemple 12 : Suivi de l'effet inhibiteur de ZnS du poly(sodium 4-styrènesulfonate) (PSS).

Afin d'effectuer ces tests, les solutions contenant le PSS utilisées sont à base de la solution A3 du Tableau 1, à laquelle sont ajoutées des quantités de la solution de PSS de l'exemple 1. Les solutions alors obtenues sont à 30, 50 et 100 ppm de PSS. Elles sont o-injectées avec la solution B du Tableau 1, via un tube en alliage (Ni₇₂Cr₁₆Fr₈) de 1 mm de diamètre extérieur et de 0.8 mm de diamètre intérieur. Les deux solutions passent ensuite au travers d'un filtre de 7 µm. Les solutions sont injectées avec un débit de 10 mL/min. Une mesure différentielle de la pression est effectuée entre l'entrée et la sortie du filtre. Les tests sont effectués à 125°C et sous une pression de 45 bar. Les résultats obtenus sont rassemblés dans le Tableau 2 ci-dessous.

**Tableau 2**

| **Résultats du Tube *Blocking Test* pour le PSS** | | |
|---|---|---|
| **Concentration** **(mg/L)** | **ΔP (psi)** | **Dépôts observés** |
| Filtre | N/A | Pas de dépôt (Fe, Cr, Ni du filtre) |
| 0 | 3,4 | Beaucoup de ZnS |
| 30 | 3,2 | Beaucoup de ZnS (comparable au blanc) |
| 50 | 2,9 | Beaucoup de ZnS (comparable au blanc) |
| 100 | 3,5 | Beaucoup de ZnS (comparable au blanc) |

Ces résultats montrent que le PSS ne présente pas d'effet inhibiteur de la formation de dépôts de ZnS.

### Exemple 13 : Suivi de l'effet inhibiteur de ZnS du Fl1

Afin d'effectuer ces tests, les solutions contenant le Fl1 utilisées sont à base de la solution A2 du Tableau 1, à laquelle sont ajoutées des quantités de la solution de Fl1 de l'exemple 2. Les solutions obtenues sont à 5, 10, 30 et 100 ppm. Elles sont co-injectées avec la solution B du Tableau 1, via un tube en alliage (Ni₇₂Cr₁₆Fr₈) de 1 mm de diamètre extérieur et de 0.8 mm de diamètre intérieur. Les deux solutions passent ensuite au travers d'un filtre de 7 µm. Les solutions sont injectées avec un débit de 10 mL/min. Une mesure différentielle de la pression est effectuée entre l'entrée et la sortie du filtre. Les tests sont effectués à 125°C et sous une pression de 45 bar. Les résultats sont rassemblés dans le Tableau 3 ci-dessous.

**Tableau 3**

| **Résultats du *Tube Blocking Test* pour le Fl1** | | |
|---|---|---|
| **Concentration (mg/l)** | **ΔP (psi)** | **Dépôts observés** |
| Filtre | N/A | Pas de dépôt (Fe, Cr, Ni du Filtre) |
| 0 | 3,3 | Recouvert partiellement de ZnS |
| 5 | 1,2 | Moins de ZnS que dans le blanc |
| 10 | 1 | Traces de ZnS |
| 30 | 0 | Traces de ZnS |
| 100 | 0 | Traces de ZnS |

Dans ces conditions, le Fl1 est actif dès 5 ppm. En effet, dès cette concentration, le Fl1 ralentit la croissance du ZnS.

### Exemple 14 : Suivi de l'effet inhibiteur de ZnS du Fl1-DETA

Afin d'effectuer ces tests, les solutions contenant le Fl1-DETA utilisées sont à base de la solution A2 du Tableau 1, à laquelle sont ajoutées des quantités données de la solution de Fl1-DETA de l'exemple 4. Les solutions obtenues sont à 1, 3, 5, 10 et 30 ppm de Fl1-DETA. Elles sont co-injectées avec la solution B du Tableau 1, via un tube en alliage (Ni₇₂Cr₁₆Fr₈) de 1 mm de diamètre extérieur et de 0.8 mm de diamètre intérieur. Les deux solutions passent ensuite au travers d'un filtre de 7 µm. Les solutions sont injectées avec un débit de 10 mL/min. Une mesure différentielle de la pression est effectuée entre l'entrée et la sortie du filtre. Les tests sont effectués à 125°C et sous une pression de 45 bar. Les résultats obtenus sont rassemblés dans le Tableau 4 ci-dessous.

**Tableau 4**

| **Résultats du Tube Blocking Test pour le Fl1-DETA** | | |
|---|---|---|
| **Concentration (mg/l)** | **AP (psi)** | **Dépôts observés** |
| Filtre | N/A | Pas de dépôt (Fe, Cr, Ni du Filtre) |
| 0 | 3,2 | Recouvert partiellement de ZnS |
| 1 | 2,7 | Moins de ZnS que dans le blanc |
| 3 | 0 | Traces de ZnS |
| 5 | 0 | Traces de ZnS |
| 10 | 0 | Traces de ZnS |
| 30 | 0 | Traces de ZnS |

Dans ces conditions, le Fl1-DETA est actif dès 3 ppm. En effet, dès cette concentration, aucune augmentation de pression n'est observée, ce qui traduit l'absence de formation de dépôt de ZnS.

## Revendications

1. Utilisation d'un copolymère renfermant (i) une unité comprenant un motif acide styrène sulfonique éventuellement neutralisé et (ii) une unité renfermant un motif acide (poly)carboxylique éventuellement neutralisé et/ou un motif (poly)amido-amine, pour inhiber ou ralentir la formation de dépôts sulfures, notamment de sulfures de plomb, de fer et/ou de zinc, lors de l'extraction de gaz ou de pétrole.

2. Utilisation selon la revendication 1, **caractérisée en ce que** le motif acide (poly)carboxylique est obtenu à partir d'un monomère insaturé portant au moins une, et de préférence deux, fonctions acides carboxyliques.

3. Utilisation selon la revendication 2, **caractérisée en ce que** le monomère porteur de fonctions acides carboxyliques est choisi parmi l'acide maléique, l'acide fumarique, l'acide itaconique, l'acide citraconique, l'anhydride cis-1,2,3,6-tétrahydrophthalique, de préférence l'acide maléique.

4. Utilisation selon l'une des revendications 2 et 3, **caractérisée en ce que** le motif (poly)amido-amine est obtenu par réaction de tout ou partie des fonctions acides carboxyliques avec un composé, de préférence un polymère, portant au moins deux fonctions amines primaires ou secondaires, choisi parmi : les polyamines telles que la DETA (diéthylène triamine), la TETA (triéthylène tétramine), la TEPA (tétraéthylène pentamine), la dihexylène triamine et la polyéthylèneimine (PEI) ; les polymères siliconés, en particulier les polydiméthylsiloxanes, fonctionnalisés par des groupements aminé ; les chitosans ; les polypeptides et protéines, de préférence la DETA et la PEI.

5. Utilisation selon l'une quelconque des revendications 1 à 4, **caractérisée en ce que** le pourcentage molaire, dans le copolymère, d'unités renfermant un motif acide styrène sulfonique éventuellement neutralisé est compris entre 10 et 90%, de préférence entre 25 et 75% et, mieux, entre 50 et 70%.

6. Utilisation selon l'une quelconque des revendications 1 à 5, **caractérisée en ce que** le copolymère est uniquement constitué d'unités comprenant, et de préférence constituées par, un motif acide styrène sulfonique éventuellement neutralisé et d'unités renfermant, et de préférence constituées par, un motif acide (poly)carboxylique éventuellement neutralisé ou un motif (poly)amido-amine.

7. Utilisation selon l'une quelconque des revendications 1 à 6, **caractérisée en ce que** le copolymère présente une masse moléculaire moyenne comprise entre de 10 et 50 kDa.

8. Méthode pour inhiber ou ralentir la formation de dépôts sulfures, notamment de sulfures de plomb, de fer et/ou de zinc, lors de l'extraction de gaz ou de pétrole, comprenant l'injection, dans un puits de forage, une formation souterraine ou un puits de pétrole ou de gaz, d'un fluide contenant un copolymère renfermant (i) une unité comprenant un motif acide styrène sulfonique éventuellement neutralisé et (ii) une unité renfermant au moins un motif acide (poly)carboxylique éventuellement neutralisé et/ou un motif (poly)amide.

9. Méthode selon la revendication 8, **caractérisée en ce que** le fluide est injecté dans un puits pétrolier fonctionnant à plus de 10 MPa, par exemple de 20 à 150 MPa, et à 150 à 250°C, par exemple de 200 à 230°C.

## Patentansprüche

1. Verwendung eines Copolymers, das (i) eine Einheit mit einer gegebenenfalls neutralisierten Styrolsulfonsäureeinheit und (ii) eine Einheit mit einer gegebenenfalls neutralisierten (Poly)carbonsäureeinheit und/oder einer (Poly)amidoamineinheit enthält, zur Hemmung oder Verlangsamung der Bildung von Sulfidablagerungen, insbesondere von Blei-, Eisen- und/oder Zinksulfiden, bei der Förderung von Gas oder Öl.

2. Verwendung nach Anspruch 1, **dadurch gekennzeichnet, dass** die (Poly)carbonsäureeinheit aus einem ungesättigten Monomer erhalten wird, das mindestens eine und vorzugsweise zwei Carbonsäurefunktionen trägt.

3. Verwendung nach Anspruch 2, **dadurch gekennzeichnet, dass** das Monomer, das Carbonsäurefunktionen trägt, ausgewählt ist aus Maleinsäure, Fumarsäure, Itaconsäure, Citraconsäure, cis-1,2,3,6-Tetrahydrophthalsäureanhydrid, vorzugsweise Maleinsäure.

4. Verwendung nach einem der Ansprüche 2 und 3, **dadurch gekennzeichnet, dass** die (Poly)amidoamineinheit durch Reaktion aller oder eines Teils der Carbonsäurefunktionen mit einer Verbindung, vorzugsweise einem Polymer, erhalten wird, die mindestens zwei primäre oder sekundäre Aminfunktionen trägt, ausgewählt aus : Polyaminen wie DETA (Diethylentriamin), TETA (Triethylentetramin), TEPA (Tetraethylenpentamin), Dihexylentriamin und Polyethylenimin (PEI); silikonhaltigen Polymeren, insbesondere Polydimethylsiloxanen, die mit Aminogruppen funktionalisiert sind; Chitosanen; Polypeptiden und Proteinen, vorzugsweise DETA und PEI.

5. Verwendung nach einem der Ansprüche 1 bis 4, **dadurch gekennzeichnet, dass** der Molprozentsatz an Einheiten im Copolymer, die eine gegebenenfalls neutralisierte Styrolsulfonsäureeinheit enthalten, zwischen einschließlich 10 und 90% liegt, vorzugsweise zwischen 25 und 75% und noch besser zwischen 50 und 70%.

6. Verwendung nach einem der Ansprüche 1 bis 5, **dadurch gekennzeichnet, dass** das Copolymer nur aus Einheiten besteht, die eine gegebenenfalls neutralisierte Styrolsulfonsäureeinheit enthalten und vorzugsweise aus dieser bestehen, und aus Einheiten, die eine gegebenenfalls neutralisierte (Poly)carbonsäureeinheit oder eine (Poly)amidoamineinheit enthalten und vorzugsweise aus dieser bestehen.

7. Verwendung nach einem der Ansprüche 1 bis 6, **dadurch gekennzeichnet, dass** das Copolymer ein mittleres Molekulargewicht zwischen einschließlich 10 und 50 kDa aufweist.

8. Verfahren zur Hemmung oder Verlangsamung der Bildung von Sulfidablagerungen, insbesondere von Blei-, Eisen- und/oder Zinksulfiden, bei der Förderung von Gas oder Öl, umfassend das Einspritzen eines Fluids, das ein Copolymer enthält, das (i) eine Einheit mit einer gegebenenfalls neutralisierten Styrolsulfonsäureeinheit und (ii) eine Einheit mit mindestens einer gegebenenfalls neutralisierten (Poly)carbonsäureeinheit und/oder einer (Poly)amideinheit umfasst, in ein Bohrloch, eine unterirdische Formation oder eine Öl- oder Gasquelle.

9. Verfahren nach Anspruch 8, **dadurch gekennzeichnet, dass** das Fluid in ein Ölbohrloch injiziert wird, das bei mehr als 10 MPa, z.B. 20 bis 150 MPa, und bei 150 bis 250°C, z.B. 200 bis 230°C, betrieben wird.

## Claims

1. Use of a copolymer containing a unit comprising (i) an optionally neutralised styrene sulphonic acid unit and (ii) a unit containing an optionally neutralised (poly)carboxylic acid unit and/or a (poly)amido-amine unit, to inhibit or slow the formation of sulphide deposits, in particular of lead, iron and/or zinc sulphides, during the extraction of gas or oil.

2. Use according to claim 1, **characterised in that** the (poly)carboxylic acid unit is obtained using an unsaturated monomer bearing at least one, and more preferably two, carboxylic acid functions.

3. Use according to claim 2, **characterised in that** the monomer bearing carboxylic acid functions is chosen from maleic acid, fumaric acid, itaconic acid, citraconic acid, cis-1,2,3,6-tetrahydrophthalic anhydride, more preferably maleic acid.

4. Use according to one of claims 2 and 3, **characterised in that** the (poly)amido-amine unit is obtained by reacting all or a portion of the carboxylic acid functions with a compound, more preferably a polymer, bearing at least two primary or secondary amine functions, chosen from among: polyamines such as DETA (diethylene triamine), TETA (triethylene tetramine), TEPA (tetraethylene pentamine), dihexylene triamine and polyethyleneimine (PEI); silicone polymers, in particular polydimethylsiloxanes, functionalised by amine groups; chitosans; polypeptides and proteins, more preferably DETA and PEI.

5. Use according to any of claims 1 to 4, **characterised in that** the molar percentage, in the copolymer, of units containing an optionally neutralised styrene sulphonic acid unit is between 10 and 90%, more preferably between 25 and 75% and, better, between 50 and 70%.

6. Use according to any of claims 1 to 5, **characterised in that** the copolymer is solely constituted of units comprising, and more preferably constituted of, an optionally neutralised styrene sulphonic acid unit and units containing, and more preferably constituted of, an optionally neutralised (poly)carboxylic acid unit or a (poly)amido-amine unit.

7. Use according to any of claims 1 to 6, **characterised in that** the copolymer has an average molecular mass between 10 and 50 kDa.

8. Method for inhibiting or slowing the formation of sulphide deposits, in particular of lead, iron and/or zinc sulphides, during the extraction of gas or oil, comprising the injection, into a wellbore, a subterranean formation or a gas or oil well, of a fluid containing a copolymer containing (i) a unit comprising an optionally neutralised styrene sulphonic acid unit and (ii) a unit containing at least one optionally neutralised (poly)carboxylic acid unit and/or a (poly)amide unit.

9. Method according to claim 8, **characterised in that** the fluid is injected into an oil well operating at more than 10 MPa, for example from 20 to 150 MPa, and at 150 to 250°C, for example from 200 to 230°C.
